# EUROPEAN PATENT APPLICATION

(11) **EP 0 892 278 A2**
(43) Date of publication of application: **20.01.1999**
(21) Application number: 98610024.6
(22) Date of filing: 14.07.1998
(51) Int. Cl.: G01S 5/02

(54) **Navigation system**

(30) Priority: 15.07.1997 NO 973275
(71) Applicant: FORSVARETS FORSKNINGSINSTITUTT, N-2007 Kjeller (NO)
(72) Inventor: Maseng, Torleiv, N-1165 Oslo (NO)
(74) Representative: Raffnsöe, Knud Rosenstand

(57) **Abstract**

The present invention relates to a navigation system, and more specifically a "Navigation By Channel Sounding" system. The following invention is a navigation system which is based upon the use of channel sounding information in order to determine the current geographical position. The system uses a database consisting of sounding information associated with a set of geographical points. The position is determined by interpolation between these points and measured values.

## Description

### FIELD OF THE INVENTION

The present invention relates to a navigation system.

More specifically the present invention relates to a navigation system based upon the use of channel sounding information in order to determine a current geographical position of a unit or units included in the system.

### FIELDS OF APPLICATION

The present invention has been developed primarily in connection with cellular radio systems, but it is to be understood that the present navigation system can also be used in conjunction with a digital communication system with area coverage line Digital Video Broadcasting etc.

**Application 1:** The Global Positioning Satellite (GPS) system provides global coverage navigation. The price of the terminals is attractive. There exist military and civilian GPS terminals and even GPS terminals which compensate for a systematic measurement error by so called differential GPS. The accuracy of these systems range from 5 to 100 meters, typically. These terminals are often mounted in a car together with a map display showing the current position of the vehicle. A GPS receiver contains a L-band radio receiver and an antenna. The invention described below, may be an alternative to these systems.

**Application 2:** The location of mobiles using cellular radio is easily determined to which base station the user is accessing. For various reasons like billing various rates in various smaller areas or in order to determine the location of an emergency call (E911 in USA), it is desirable to locate the mobile accurately. Systems for this have been proposed based upon measuring the time of arrival difference by 3 nearby base stations resulting in an accuracy of 125 meters typically. The advantage of this method is that no modification to the mobiles is needed. The invention described below, may be an alternative to these systems.

### OBJECTIVES OF THE INVENTION

A main objective of the present invention is to provide a navigation system which can be used at least for the previously mentioned application 1 and application 2.

In comparison with a GPS terminal it is an objective of the present invention to provide a more accurate system which does not need an extra radio receiver when used in conjunction with a digital communication system, for example the GSM system.

### SUMMARY OF THE INVENTION

The above objectives are achieved in a system according to the present invention, which is based upon the use of channel sounding information in order to determine the current geographical position, the system using a database consisting of sounding information associated with a set of geographical points, and the position being determined by interpolation between these points and measured values.

Although the present system requires a database which may change, an update of the database may be continuously logged by e.g. taxies with logging facilities, just like that used by GSM operators today for monitoring the quality of service in the network.

Any current database may be updated by radio whenever the service is called for.

It is to be understood that when the system makes a handover to another base station, a new database associated with this other base station will be used.

Further features and advantages of the present invention will appear from the following description taken in conjunction with the appending drawings, as well as from the enclosed patent claims.

### BRIEF DISCLOSURE OF THE DRAWINGS

Fig. 1 is a schematical block diagram illustrating a first embodiment of the present invention, especially related to a GSM terminal, wherein the channel impulse response is calculated by the receiver in the mobile terminal.

Fig. 2 is a schematical block diagram illustrating a second embodiment of the present invention, specifically related to a GSM base station, wherein the channel impulse response is calculated for every user.

### DESCRIPTION OF EMBODIMENTS

As stated previously, the present invention discloses a navigation system which is based upon the use of channel sounding information in order to determine the current geographical position.

More specifically, the system uses Channel Sounding Information also known as "Channel Response Measurements", in the following known as channel response, which is a vector obtained by a radio receiver and a transmitter, the system comparing these vectors with stored values of similar information associated with a geographical grid, and by interpolation between said vectors and values calculates an error signal called a metric, for thereby determining the current position of a mobile unit.

More specifically the system will calculate a value used for such metric calculation based upon the absolute value of the measured complex (in quadrature and in phase) channel response (ACR) calculated by selecting the maximum value for each vector component (MACR) corresponding to a reflection with a certain propagation delay, whereafter the maximisation is carried out over a certain number of measurements corresponding to a number of wavelengths along the path along which the mobile has moved.

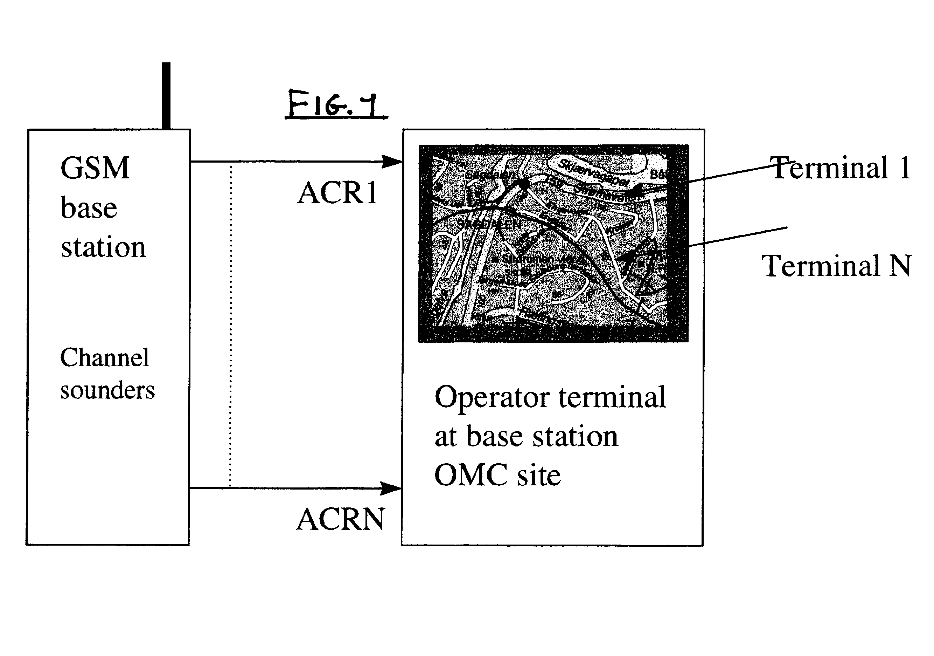

In connection with the embodiment illustrated in Fig. 1, which is specifically related to a GSM terminal, the channel impulse response is calculated, specifically for every TCH and ACCH time slots, by a channel sounder. This information is normally used by the receiver locally. Further, this information is comprised by complex vectors which are rather characteristic for a geographical site. From a sequence of these vectors, the most likely path on a map can be identified by comparing the sequence with stored vectors associated with such a geographical map.

In a more specific embodiment the use of a metric described previously will involve the accumulation over several measured alternative geographical positions and also involve a decision about the position taken based upon that alternative with the maximum accumulated metric. In other words, there may be used a maximum likelihood sequence estimation technique or an approximation to this, to select the most likely sequence corresponding to a route.

As illustrated in Fig. 1, in the described embodiments the algorithms and database may appropriately be stored with the user terminal, a new database being obtained from CD or from GSM radio. By using the system in the described application it is possible for the user terminal to have indicated, for example on a display, the road which has been driven by the mobile unit in question.

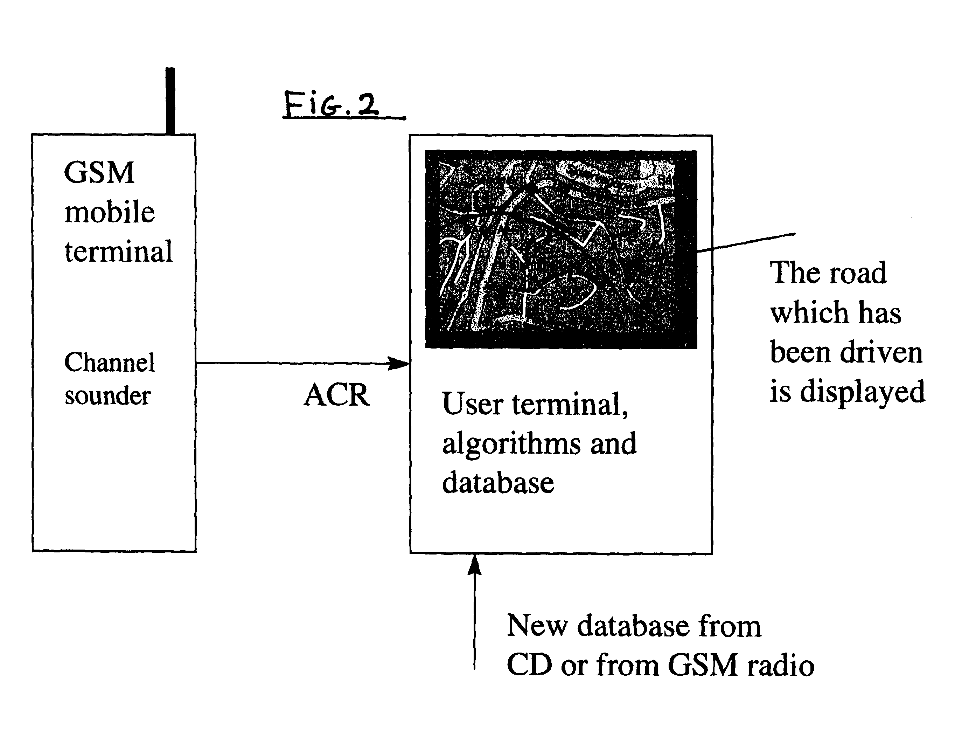

The basic principles of the system according to the present invention can also be used in connection with the embodiment illustrated in Fig. 2, which is particularly related to a GSM base station. In this embodiment the channel impulse response is calculated for every user, and by using the technique according to the present invention, the cellular operator at the Operations and Maintenance Centre (OMC) site may locate emergency calls or use this information for variable billing outside the "home area" in question.

As illustrated in Fig. 2 the channel sounders of the GSM base station will enable the system to affect metric calculation based upon the absolute value of a plurality of measured complex (in quadrature and in phase) channel responses (ACR1 to ACRN), associated with an individual Terminal 1 - Terminal N, respectively, the calculation, in turn, being based upon the selection of the maximum value for each vector component MACR, respectively, corresponding to a reflection within a certain propagation delay.

It is to be understood that for improving the system the absolute value of the measured complex channel response for a given position described above may be quantized (QMACR) and in particular hard limited to a binary vector.

In summary, said embodiments will, according to the present invention, involve the use of Channel Sounding Information also known as "Channel Response Measurements", in the following known as the channel response which is a vector, obtained by a radio receiver and a transmitter, and involve comparing these vectors with stored values of similar information associated with a geographical grid, and by interpolation between these values calculating an error signal called a metric, for thereby determining the current position of a mobile platform.

In connection with a general mobile system it is according the present invention appropriate to use the digital communication system in question, so as to utilise the receiver thereof by the present navigation system, i.e. as a receiver by which the complex channel response is derived.

It would also be appropriate to use a mobile cellular communication system described above in combination with a so called "timing advance system" used for aligning the time slot to the receive time slot to the base stations and using this information for aligning the measured complex channel response.

As mentioned earlier, the present navigation system can be used in any mobile cellular communication system, for example using mobile cellular systems like GSM, DCS1800, and similar system based upon the GSM standard.

Further, it should be observed that the present system could be used in any digital communication system with higher bandwidth than the coherence bandwidth, for example the system called Digital Video Broadcasting for distributing digital TV.

It is also to be understood that the system may comprise means for supplying database and map information by radio, for example via the communication system.

It is also to be understood that the present system can be used in combination with sensors like speedometer, or a GPS receiver or a compass.

Finally, it is to be understood that the system may comprise a transmitter and a receiver operating at a particular radio band with a centre frequency and a given wavelength, said transmitter and receiver being co-located in a mobile unit, for example a mobile radar, or said transmitter and receiver being located a different positions, for example like a bistatic radar.

## Claims

1. A navigation system,
**characterised** by the use of Channel Sounding Information also known as "Channel Response Measurements", in the following known as the channel response which is a vector, obtained by a radio receiver and a transmitter, and by comparing these vectors with stored values of similar information associated with a geographical grid, and by interpolation therebetween for calculating an error signal called a metric, so as to determine the current position of a mobile platform.

2. A navigation system as claimed in claim 1,
**characterised** by the use of a system where the transmitter and the receiver operates at a particular radio band with a centre frequency and a given wavelength, are co-located in the mobile platform like a mobile radar, and the transmitter and the receiver are located at different positions like a bistatic radar.

3. A navigation system as claimed in claim 1 or 2,
**characterised** by the use of a system where the system calculates a value used for metric calculation based upon the absolute value of the measured complex (in quadrature and in phase) channel response (ACR) calculated by selecting the maximum value for each vector component (MACR) corresponding to a reflection with a certain propagation delay, the maximisation being carried out over a certain number of measurements corresponding to a number of wavelengths along the path over which the mobile has moved.

4. A navigation system as claimed in any of the preceding claims,
**characterised** by the use of a system where the absolute value of the measured complex channel response for a given position described above is quantized (QMACR) and in particular hard limited to a binary vector.

5. A navigation system as claimed in any of the preceding claims,
**characterised** by the use of a system where the system uses a metric based upon the difference between the absolute value of the quantized value of the measured complex channel response (QAMACR) and that stored for a particular geographical position.

6. A navigation system as claimed in any of the preceding claims,
**characterised** by the use of a metric described above accumulated over several measured alternative geographical positions and a decision about the position taken based upon that alternative with the minimum accumulated metric.

7. A navigation system as claimed in any of the preceding claims,
**characterised** by the use of a digital communication system where the receiver by which the complex channel response is derived for use by the receiver in the digital communication system i.e. being shared by the navigation system.

8. A navigation system as claimed in any of the preceding claims,
**characterised** by the use of a mobile cellular communication system described above in combination with a so called "timing advance system" used for aligning the time slot to the receive time slot to the base stations and using this information for aligning the measured complex channel response.

9. A navigation system as claimed in any of the preceding claims,
**characterised** by the use a mobile cellular communication system described above using mobile cellular systems like GSM, DCS 1800 and similar systems based upon the GSM standard.

10. A navigation system as claimed in any claims 7-9,
**characterised** by the combination of these with a geographical database containing maps with road positions and terrain data where the position determined is displayed on the map directly.

11. A navigation system as claimed in any of the preceding claims,
**characterised in** that the database and or the map information is supplied by radio via the digital communication system.

12. A navigation system as claimed in any of the preceding claims,
**characterised**by the combination of this with sensors like a speedometer, or a GPS receiver or a compass.

13. A navigation system as claimed in any of the preceding claims,
**characterised** by the use of a system where the transmitter and the receiver operates at a particular radio band with a centre frequency and a given wavelength, and the transmitter and the receiver are located at different positions like a bistatic radar.
